(19) **Europäisches Patentamt**
**European Patent Office**
**Office européen des brevets**

(11) **EP 2 045 903 A2**

(12) **EUROPEAN PATENT APPLICATION**

(43) Date of publication:
**08.04.2009 Bulletin 2009/15**

(51) Int Cl.:
***H02M 3/155*** *(2006.01)*

(21) Application number: **08253227.6**

(22) Date of filing: **03.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.10.2007 JP 2007259402**

(71) Applicant: **NEC TOSHIBA Space Systems, Ltd.**
**Fuchu-shi**
**Tokyo (JP)**

(72) Inventor: **Yoshida, Teiji**
**Tokyo (JP)**

(74) Representative: **Robson, Aidan John**
**Reddie & Grose**
**16 Theobalds Road**
**London**
**WC1X 8PL (GB)**

(54) **DC-DC converter**

(57) Disclosed is a DC-DC converter for suitably converting the voltage of a solar panel into a desired output voltage to be supplied to various observation equipment installed in an artificial satellite. The DC-DC converter 10 comprises an input coil L1, a first intermediate capacitor C1 and a first intermediate coil Lm1 connected in series between positive and negative terminals of an input voltage source E, a switch S and a diode D having their one ends connected to a node a of the input coil L1 and the first intermediate capacitor C1, a second intermediate coil Lm2 connected between the other end (node d) of the switch S and the negative terminal of the input voltage source E, a second intermediate capacitor C2 connected between the other end (node c of the diode D and the node d and a load R connected to the node c through an output coil L2.

FIG. 4

44 DC voltage source  42  40  46 Load

DC–DC converter
Battery
Solar battery etc.

Feedback control circuit
$Vi \leqq Vo$
$Vo = Vi/(1-D)$

Electrical/electronic circuit
DC–DC converter
Battery etc.

EP 2 045 903 A2

Printed by Jouve, 75001 PARIS (FR)

**Description**

INCORPORATION BY REFERENCE

This invention is based upon and claims the benefit of priority from Japanese patent application no. 2007-259402, the disclosure of which is incorporated herein in its entirety by reference.

FIELD OF THE INVENTION

The present invention relates to a DC-DC converter, more specifically to a switching type DC-DC converter particularly suited for supplying operation power for various observation equipment installed on an artificial satellite by stepping-up the output voltage of a solar panel to a desired voltage required by those equipment as a load.

BACKGROUND OF THE INVENTION

Artificial satellites, space crafts, particularly those for exploring planets that are in the orbit largely changing their distances from the sun generally use solar panels that utilize solar power as the power supply for driving various observation and control equipment and machines that are installed in such satellites. The use of solar panels enables to relatively constantly supply electrical power for an extended time in the space.

The output voltage that is acquired from such solar panel is insufficient or impossible to stably provide a desired voltage required for properly operating various observation equipment that are mentioned hereinabove. Particularly, in case of planet exploration space crafts having large changes in distance from the sun, it is normal to use a switching type DC-DC converter including one or more switching device for converting the output voltage from the solar panel into a desired voltage. Moreover, in case of planet exploration space crafts for observing planets' electric and/or magnetic field, DC-DC converters to be used in such satellites are absolutely required not only to output a stable voltage but also to be a low noise in which the generated noise level is quite low.

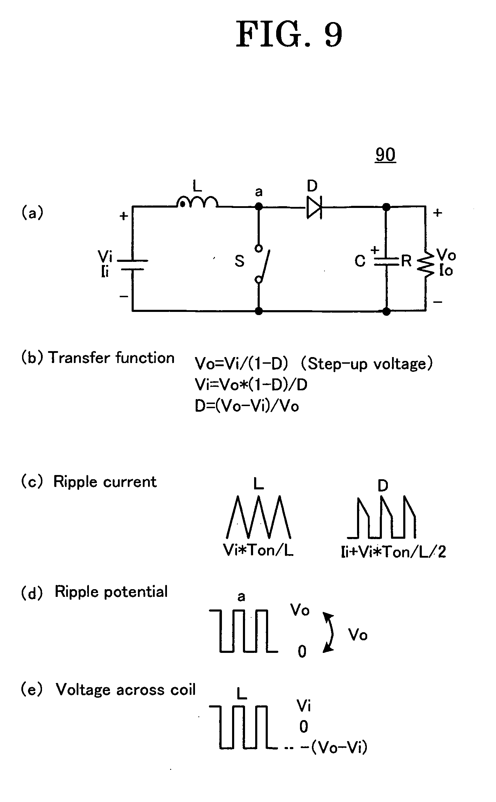

Fig. 9 shows a general example of a conventional DC-DC converter (Boost converter). As shown in Fig. 9 (a), the DC-DC converter 90 comprises a coil (inductor) L and a switching device including, for example, a transistor or the like (simply referred to as a switch below) S connected in series between both ends of an input voltage source Vi and a parallel circuit of a load resistor R and a smoothing capacitor C connected across both ends of the switch S through a diode (rectifying device) D.

In Fig. 9, (b) is a transfer function of the DC-DC converter 90 as shown in (a). (c) shows ripple currents flowing through the inductor L and the diode D. (d) is a ripple voltage (or ripple potential) on the node a of the coil L and the diode D. And (e) is a voltage on the coil L.

In the conventional DC-DC converter 90 as described hereinabove, ripple currents as shown in Fig. 9 (c) flow in response to ON/OFF operation of the switch S. That is, the ripple current flowing through the coil L is generally triangular. The amplitude of the triangular ripple current is proportional to the ON time of the switch S. And the energy stored in the coil L during the ON time of the switch S is supplied to the load R through the diode D during the OFF time of the switch S. In other words, it is possible to supply a desired voltage to load R by controlling the ON time of the switch S in response to the voltage Vi of the input voltage source.

Unfortunately, although such general DC-DC converter 90 is able to stably provides a desired output voltage from a fluctuating input voltage source, the ripple current in the coil L unavoidably accompanies with large noise at the switching frequency of the switch S as well as harmonic frequencies in the multiple times of the switching frequency. Such triangular ripple current provides a relatively low noise level as compared with, for example, a rectangular pulses but is not acceptable as a power supply for planet exploring space crafts in which highly sensitive observation equipment for observing very weak electric and/or magnetic field are installed.

Conventional DC-DC converters such as those described hereinabove have the following problems or drawbacks. That is, in the conventional steep-up type DC-DC converter (Boost converter) 90 as shown in Fig. 9, the input current is a triangle wave, while the output current is a pulse wave, thereby exhibiting a large output noise. The fact that the output current is a pulse wave means a large current change in time at the switching frequency, thereby making it impossible or very difficult to apply such converter to a power supply for aforementioned sensitive observation equipment.

SUMMARY OF THE INVENTION

The present invention was made in consideration of the above circumstances and it is a primary object of the present invention to provide a DC-DC converter that is simple in circuit construction and capable of supplying a desired step-up output voltage that is non-inverted or has the same polarity as the input voltage.

In order to achieve the above objectives, the DC-DC converter according to the present invention employs the following unique construction. That is, the DC-DC converter includes a series connection of an input inductance and a switching device connected between positive and negative terminals of an input voltage source and a load connected to the node of the input inductor and the switching device through a rectifying device for converting and outputting to the load a desired voltage of the same polarity as the input voltage source, further comprising:

a first intermediate inductor connected between the output side of the input inductor and the negative terminal of the input voltage source; and
a second intermediate inductor connected between the output side of the switching device and the negative terminal of the input voltage source;

wherein the input inductor and the output inductor are magnetically coupled to the first intermediate inductor and the second intermediate inductor.

Also, the DC-DC converter according to the present invention employs the following unique construction. That is, the DC-DC converter includes a series circuit of an input inductor and a switching device connected between positive and negative terminals of an input voltage source and a load connected to the node of the switching device and the input inductor through a rectifying device for converting and outputting a desired step-up voltage to the load a desired step-up voltage of the same polarity as the input voltage source, further comprising:

a series connection of a first intermediate inductor and a first intermediate capacitor connected between the node of the input inductor and the rectifying device and the negative terminal of the input voltage source;
an output inductor connected between the rectifying device and the load;
a second intermediate inductor connected between the output end of the switching device and the negative terminal of the input voltage source; and
a second capacitor connected between the node of the second intermediate inductor and the switching device and the node of the rectifying device and the output inductor.

The DC-DC converter according to the present invention exhibits the following unique advantages. That is, the construction is simple because mutually magnetically coupled input and output inductors as well as the intermediate inductors are only added to the conventional DC-DC converter. And it exhibits low noise by significantly reducing or essentially eliminating ripple currents in the input and output inductors. Moreover, since the input, output and intermediate inductors are magnetically coupled to equalize terminal voltages thereacross, a single transformer may be used to configure these inductors by winding coils on a common magnetic core. As a result, it finds particularly preferable applications as a power supply for planet exploration space crafts that absolutely require a stabilized low noise output voltage from a fluctuating input voltage source.

BRIEF DESCRIPTION OF THE DRAWINGS

The above and other objects and advantages of the present invention will be best understood by reading the following descriptions made with reference to the accompanying drawings, wherein:

Fig. 1 shows a preferred embodiment of the present invention, wherein (a) is a circuit schematic, (b) is the transfer function, (c1~c4) show ripple currents in different circuit portions under different conditions, (d) shows ripple voltages and (e) shows voltages across coils;
Fig. 2 shows circuit schematics for describing operations of the DC-DC converter as shown in Fig. 1 (a), wherein (a) is the entire circuit schematic, (b) shows potentials and currents in and on various circuit portions when the switch S is ON and (c) shows potentials and currents in and on various circuit portions when the switch S is OFF;
Fig. 3 is illustrations for describing how to reduce ripple currents in the DC-DC converter according to the present invention;
Fig. 4 is an exemplified circuit schematic of the DC-DC converter apparatus using the DC-DC converter according to the present invention;
Fig. 5 illustrates voltage waveforms (a)~(d) and current waveforms (e)~(h) in various coils of the DC-DC converter according to the present invention when coils are not magnetic coupled;
Fig. 6 illustrates voltage waveforms (a)~(d) and current waveforms (e)~(h) in various coils of the DC-DC converter according to the present invention when the coils are magnetically coupled;
Fig. 7 is a circuit schematic of another embodiment of the DC-DC converter apparatus using the DC-Dc converter according to the present invention;
Fig. 8 is a circuit schematic of still another embodiment of the DC-DC converter apparatus using the DC-DC converter according to the present invention; and
Fig. 9 is a circuit schematic of a conventional step-up type DC-DC converter.

DETAILED DESCRIPTION OF EXEMPLARY EMBODIMENTS

Now, the construction and operation of a preferred embodiment of the DC-DC converter according to the present invention will be described in greater detail with reference to the accompanying drawings.

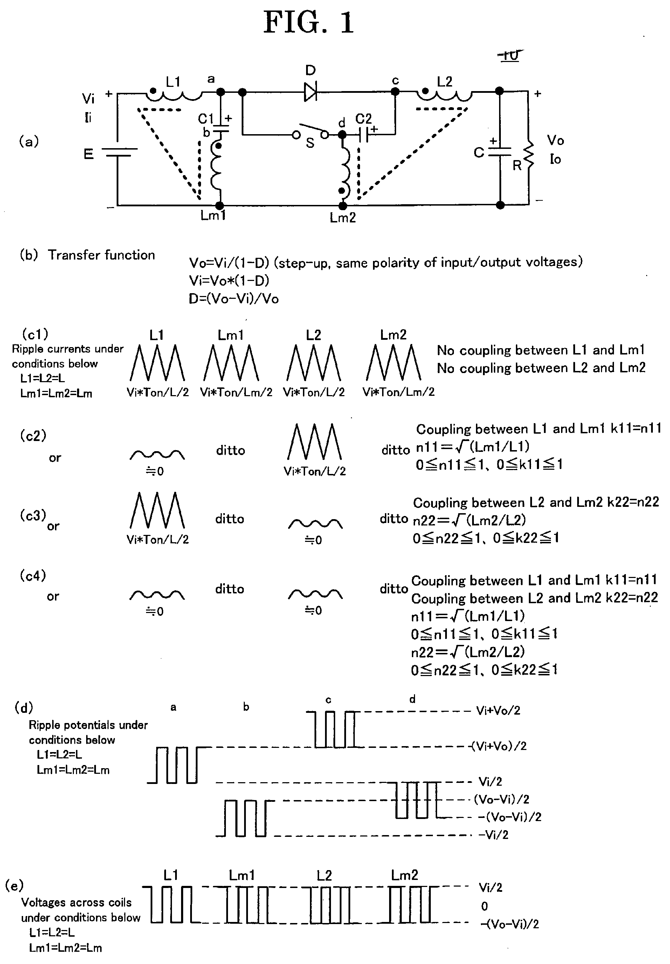

Firstly, a reference will be made on Fig. 1 for describing the preferred embodiment of the DC-DC converter according to the present invention. Fig. 1 (a) is a circuit schematic to illustrate the construction of the DC-DC converter. Fig. 1 (b) is the transfer function. Fig. 1 (c1)~(c4) shows current waveforms through a plurality of coils (inductors) constituting the DC-DC converter. Fig. 1 (d) shows ripple potential waveforms on various portions of the circuit as shown in Fig. 1 (a). Finally, Fig. 1 (e) shows voltages across various coils.

Now, the construction of the preferred embodiment of the DC-DC converter 10 according to the present invention will be described with reference to Fig. 1 (a). The DC-DC converter 10 comprises an input voltage source E such as, for example, a solar panels, an input coil (inductor) L1, a first intermediate capacitor C1 and a first intermediate coil Lm1 connected in series between positive and negative terminals of the input voltage source E, a switch (switching device) S and a second intermediate coil Lm2 connected in series between a node a of the input coil L1 and the first intermediate capacitor C1 and the negative terminal (-) of the input voltage source E, a second intermediate capacitor C2, an output coil L2 and a load (parallel connection of a resistor r and a smoothing capacitor C) connected in series across the second intermediate coil Lm2, and a diode (rectifying device) D connected between the node a and a node c of the second intermediate capacitor C2 and the output coil L2. In addition to the aforementioned nodes a and c, there are a node b of the first intermediate capacitor C1 and the first intermediate coil Lm1 and a node d of the second intermediate capacitor C2 and the second intermediate coil Lm2.

Fig. 1 (c1) ~ (c4) illustrate approximate waveforms of the ripple currents through the input coil L1, the first intermediate coil Lm1, the second intermediate coil Lm2 and the output coil L2 under different coupling conditions between these coils. That is, Fig. 1 (c1) illustrates ripple currents through the input coil L1, the first intermediate coil Lm1, the output coil L2 and the second intermediate coil Lm2 in case of no coupling between these coils from left to right in the drawing, respectively. They indicate in this case that all of the ripple currents through these coils L1, Lm1, L2 and Lm2 are large and triangular. Fig. 1 (c2) illustrates ripple currents through the respective coils in case of coupling between the input coil L1 and the first intermediate coil Lm1 with coupling factor $k11 = n11$. In this case, although only the ripple current through the input coil L1 is suppressed, all other ripple currents (through the remaining coils Lm1, L2 and Lm2) remain unchanged from those in Fig. 1 (c1).

On the other hand, Fig. 1 (c3) illustrates ripple currents through the respective coils in case of coupling between the output coil L2 and the second intermediate coil Lm2 with coupling factor $k22 = n22$. In this case, only the ripple current through the output coil L2 is suppressed, while the other ripple currents (through the remaining coils L1, Lm1 and Lm2) remain unchanged from those in Fig. 1 (c1). Finally, Fig. 1 (c4) illustrates ripple currents through the respective coils in case of coupling between the input coils L1 and the first intermediate coil Lm1 with coupling factor $k11 = n11$ and also coupling between the output coil L2 and the second intermediate coupling Lm2 with coupling factor $k22 = n22$. In this case, both ripple currents through the input coil L1 and the output coil L2 are suppressed, thereby achieving low noise.

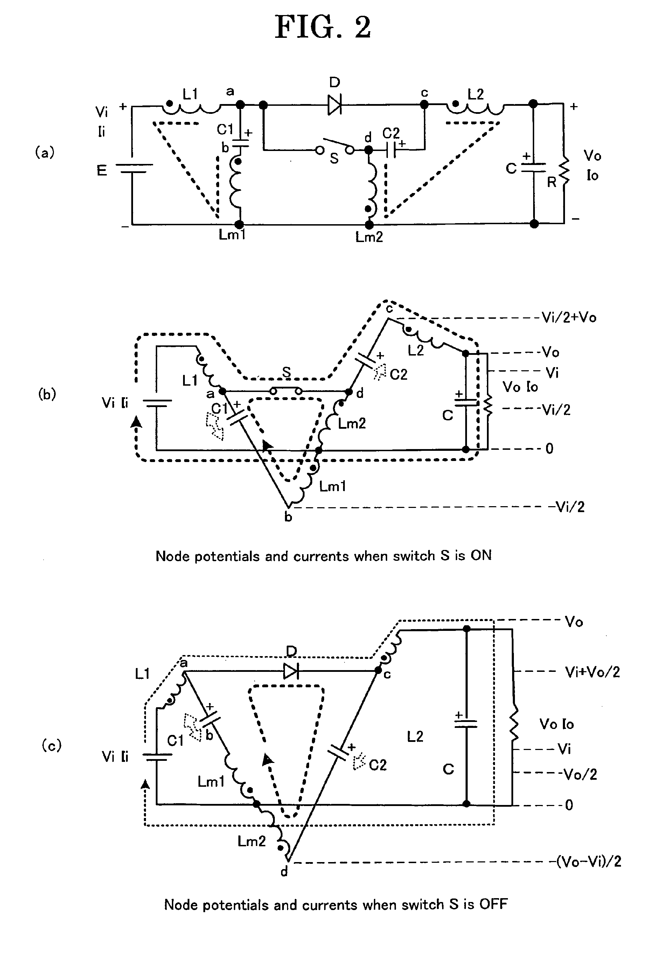

Now, a reference is made to Fig. 2 for describing the operation of the DC-DC converter 10 according to the present invention as shown in Fig. 1 more in detail. Fig. 2 (a) is the same circuit schematic as shown in Fig. 1 (a) showing the construction of the DC-DC converter 10 according to the present invention. Fig. 2 (b) shows currents flowing through the respective coils L1, L2, Lm1, Lm2, the capacitors C1, C2 and the load R as well as potentials on the nodes a - d when the switch S is ON. On the other hand, shown in Fig. 2 (c) are currents through the respective coils L1, L2, Lm1, Lm2, the capacitors C1, C2 and the load R as well as potentials on the nodes a - d when the switch S is OFF.

Firstly, a description will be made with reference to Fig. 2 (b). When the switch S is ON, exciting currents flow through all of the coils L1, L2, Lm1 and Lm2 as indicated by dotted lines in the drawing, thereby providing an output current through the load R from the input voltage source E. The current through the first intermediate capacitor C1 is in the discharging direction during the former half and in the charging direction during the latter half. On the other hand, the current through the second intermediate capacitor C2 is in the discharging direction.

Now, a reference is made to Fig. 2 (c) for describing the operation when the switch S is OFF. In this condition, a releasing current flows from the input voltage source E through all of the coils L1, L2, Lm1 and Lm2 to provide an output current into the load R by way of the diode D. Opposite to the aforementioned direction when the switch S is ON, the direction of the current through the first intermediate capacitor C1 is in the charging direction during the former half, while in the discharging direction during the charging direction. On the other hand, the current through the second intermediate capacitor C2 is in the charging direction.

Now, potentials on the respective nodes a - d as shown in Fig. 2 (b) and Fig. 2 (c) are in the case of $L1 = L2$

(i. e., the inductance of the input coil L1 is equal to that of the output coil L2) and Lm1 = Lm2 (i. e., the inductance of the first intermediate coil Lm1 is equal to that of the second intermediate coil Lm2) that will be described hereinafter. It is to be noted that currents flow through the input coil L1 and the output coil L2 during the time when the switch S is ON and OFF. That is, the current is increasing (positive going) when the switch S is ON, while decreasing (negative going) when the switch S is OFF, thereby developing a triangular wave (note that the current is not a pulse wave, i.e., a rectangular wave) .

Now, the operation of the DC-DC converter 10 according to the present invention will be analyzed hereunder. In this operational analysis, it is assumed that the switch S is an ideal switch, the diode D is also an ideal diode and time durations when the switch S is ON and OFF are referred to as ton toff, respectively. Moreover, it is assumed that each of the first intermediate capacitor C1 and the second intermediate capacitor C2 has sufficiently low impedance at the switching frequency of the switch S (i. e., these capacitors C1 and C2 have sufficiently large capacitance) and the first and second intermediate capacitors C1 and C2 can be considered as power sources having voltages equal to the voltage Vi of the input voltage source E and the voltage Vo of the output voltage, respectively.

(a) When the switch S is ON Potentials (Va ~ Vd) on the nodes a ~ d and ripple currents (ΔIL1 ~ ΔILm2) of the respective coils L1, L2, Lm1, Lm2 have the following relationships:

$$Vb = Va - Vi$$

$$Vc = Va - Vo$$

$$Vd = Va$$

$$\Delta IL1 + \Delta ILm1 = \Delta ILm2 + \Delta IL2$$

Amplitudes of the ripple currents (ΔIL1 ~ ΔILm2) through the respective coils L1 ~ Lm2 are given by the following mathematical expressions. (It is to be noted herein that ⇒ means "equals to" in case of L1 = L2 and Lm1 = Lm2.)

$$\Delta IL1 = (1/L2 + 1/Lm2)/(1/L1 + 1/Lm1 + 1/L2 + 1/Lm2) \times Vi \times ton/L1$$

$$\Rightarrow (Vi \times ton/L1/2)$$

$$\Delta ILm1 = (1/L2 + 1/Lm2)/(1/L1 + 1/Lm1 + 1/L2 + 1/Lm2) \times Vi \times ton/Lm1)$$

$$\Rightarrow (Vi \times ton/Lm1/2)$$

$$\Delta IL2 = (1/L1 + 1/Lm1)/(1/L1 + 1/Lm1 + 1/L2 + 1/Lm2) \times Vi \times ton/L2$$

$$\Rightarrow (Vi \times ton/L2/2)$$

$$\Delta ILm2 = (1/L1 + 1/Lm1)/(1/L1 + 1/Lm1 + 1/L2 + 1/Lm2) \times Vi \times ton/Lm2$$

$$\Rightarrow (Vi \times ton/Lm2/2)$$

Potentials (Va ~ Vd) on the respective nodes a - d are given by the following mathematical expressions. (Again, it is to be noted herein that $\Rightarrow$ means "equals to" in case of L1 = L2 and Lm1 = Lm2.)

$$Va = (1/L1 + 1/Lm1)/(1/L1 + 1/Lm1 + 1/L2 + 1/Lm2) \times Vi \Rightarrow (Vi/2)$$

$$Vb = -(1/L2 + 1/Lm2)/(1/L1 + 1/Lm1 + 1/L2 + 1/Lm2) \times Vi \Rightarrow -(Vi/2)$$

$$Vc = (1/L1 + 1/Lm1)/(1/L1 + 1/Lm1 + 1/L2 + 1/Lm2) \times Vi +Vo \Rightarrow (Vi/2) + Vo$$

$$Vd = (1/L1 + 1/Lm1)/(1/L1 + 1/Lm1 + 1/L2 + 1/Lm2) \times Vi \Rightarrow (Vi/2)$$

Voltages across the respective coils L1 ~ Lm2 are given by the following mathematical expressions. (It is to be noted herein that $\Rightarrow$ means "equal to" in case of L1 = L2 and Lm1 = Lm2.)

$$VL1 = (1/L2 + 1/Lm2)/(1/L1 + 1/Lm1 + 1/L2 + 1/Lm2) \times Vi \Rightarrow (Vi/2)$$

$$VLm1 = (1/L2 + 1/Lm2)/(1/L1 + 1/Lm1 + 1/L2 + 1/Lm2) \times Vi \Rightarrow (Vi/2)$$

$$VL2 = (1/L1 + 1/Lm1)/(1/L1 + 1/Lm1 + 1/L2 + 1/Lm2) \times Vi \Rightarrow (Vi/2)$$

$$VLm2 = (1/L1 + 1/Lm1)/(1/L1 + 1/Lm1 + 1/L2 + 1/Lm2) \times Vi \Rightarrow (Vi/2)$$

(b) When the switch S is OFF Potentials on the respective nodes a - d and ripple currents ($\Delta IL1$ ~ $\Delta ILm2$) through the respective coils L1 ~ Lm2 are given by the following mathematical expressions:

$$Vb = Va - Vi$$

$$Vc = Va$$

$$Vd = Va - Vo$$

$$\Delta IL1 + \Delta ILm1 = \Delta ILm2 + \Delta IL2$$

The ripple currents ($\Delta IL1 \sim \Delta ILm2$) through the respective coils L1 $\sim$ Lm2 are given by the following mathematical expressions. (It is to be noted herein that $\Rightarrow$ means "equal to" in case of L1 = L2 and Lm1 = Lm2.)

$$\Delta IL1 = (1/L2 + 1/Lm2)/(1/L1 + 1/Lm1 + 1/L2 + 1/Lm2) \times (Vo - Vi) \Rightarrow ((Vo - Vi)/2)$$

$$\Delta ILm1 = (1/L2 + 1/Lm2)/(1/L1 + 1/Lm1 + 1/L2 + 1/Lm2) \times (Vo-Vi) \Rightarrow ((Vo - Vi)/2)$$

$$\Delta IL2 = (1/L1 + 1/Lm1)/(1/L1 + 1/Lm1 + 1/L2 + 1/Lm2) \times (Vo - Vi) \Rightarrow ((Vo - Vi)/2)$$

$$\Delta ILm2 = (1/L1 + 1/Lm1)/(1/L1 + 1/Lm1 + 1/L2 + 1/Lm2) \times (Vo - Vi) \Rightarrow ((Vo - Vi)/2)$$

Potentials (Va $\sim$ Vd) on the respective nodes a $\sim$ d are given by the following mathematical expressions. (It is to be noted herein that $\Rightarrow$ means "equals to" in case of L1 = L2 and Lm1 = Lm2.)

$$Va = \{(1/L1 + 1/Lm1) \times Vi + (1/L2 + 1/Lm2) \times Vo\}/(1/L1 + 1/Lm1 + 1/L2 + 1/Lm2)$$
$$\Rightarrow (Vi + Vo)/2$$

$$Vb = (1/L2 + 1/Lm2)/(1/L1 + 1/Lm1 + 1/L2 + 1/Lm2) \times (Vo - Vi)$$
$$\Rightarrow (Vo - Vi)/2$$

$$Vc = \{(1/L1 + 1/Lm1) \times Vi + (1/L2 + 1/Lm2) \times Vo\}/(1/L1 + 1/Lm1 + 1/L2 + 1/Lm2)$$
$$\Rightarrow (Vi + Vo)/2$$

```
Vd = - (1/L1 + 1/Lm1)/(1/L1 + 1/Lm1 + 1/L2 + 1/Lm2) x (Vo -

Vi) ⇒ - (Vo - Vi)/2
```

Voltages (VL1 ~ VLm2) across the respective coils L1 ~ Lm2 are given by the following mathematical expressions. (It is to be noted herein that ⇒ means "equals to" in case of L1 = L2 and Lm1 = Lm2.)

```
VL1 = - (1/L2 + 1/Lm2)/(1/L1 + 1/Lm1 + 1/L2 + 1/Lm2) x (Vo -

Vi) ⇒ - (Vo - Vi)/2
```

```
VLm1 = - ((1/L2 + 1/Lm2)/(1/L1 + 1/Lm1 + 1/L2 + 1/Lm2) x (Vo

- Vi) ⇒ - (Vo - Vi)/2
```

```
VL2 = - (1/L1 + 1/Lm1)/(1/L1 + 1/Lm1 + 1/L2 + 1/Lm2) x (Vo -

Vi) ⇒ - (Vo - Vi)/2
```

```
VLm2 = - (1/L1 + 1/Lm1)/(1/L1 + 1/Lm1 + 1/L2 + 1/Lm2) x (Vo

- Vi) ⇒ - (Vo - Vi)/2
```

Conditions that the DC-DC 10 converter operates normally include:

```
Δ Ix (ON) = Δ Ix (OFF)
```

```
Vx (ON) x ton = - Vx(OFF) x toff
```

It is to be noted herein that x indicates either one of the coils L1, Lm1, L2 and Lm2. Solution of the above equations leads to conclusions as follows:

```
Vo = Vi x (ton + toff)/toff = Vi/(1-D)
```

Where, D = ton/(ton + toff)

This suggests that the DC-DC converter 10 is capable of operating as a voltage step-up converter.

As apparent from the above description, the DC-DC converter 10 according to the present invention is capable of operating as a voltage step-up DC-DC converter in which the ripple currents through the input coil L1 and the output coil L2 are triangular.

(c) Reduction or zero ripple currents through input and output coils

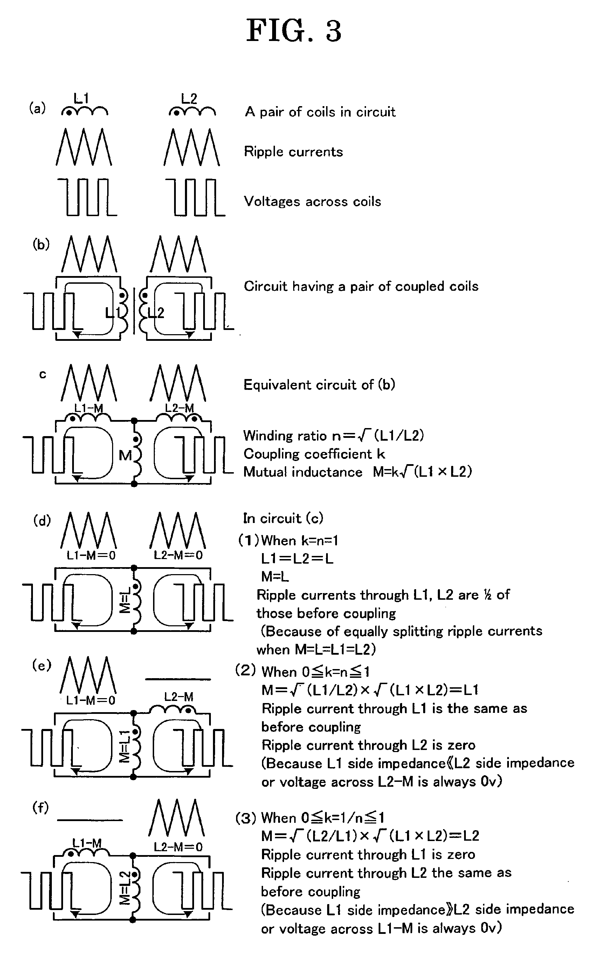

Now, reduction or zero ripple currents through the input coil L1 and the output coil L2 in the DC-DC converter 10 will be described with reference to illustrations in Fig. 3. Fig. 3 (a) illustrates the two coils (namely input coil L1 and output coil L2) in the DC-DC converter circuit, ripple currents through these coils and voltages thereacross. If there are two coils L1 and L2 in the circuit that develop equal voltage across these coils as illustrated in Fig. 3 (a) and the coils L1 and L2 are coupled in the same polarity as shown in Fig. 3 (b), these two coils L1 and L2 can be represented as the equivalent circuit as illustrated in Fig. 3 (c). Now, it is assumed that the coupling factor and the winding ratio of these two coils L1 and L2 satisfy the relationship as illustrated in Fig. 3 (d) (1), the ripple currents through these coils can be reduced to one half as compared to those before coupling. If the coupling factor and the winding ratio are of the relationship as illustrated in Fig. 3 (e) (2), the ripple current through the coil L1 remain unchanged from that before coupling but the ripple current through the coil L2 becomes zero (i. e., zero ripple). On the other hand, if the coupling factor and the winding ratio of the coils L1 and L2 are of the relationship as illustrated in Fig. 3 (f) (3), the ripple current through the coil L1 becomes zero, while the ripple current through the coil L2 remains unchanged from that before coupling.

In the DC-DC converter 10 according to the present invention, the relationships VL = VLm, or namely VL1 = VLm1 and VL2 = VLm2 always hold true as shown in Fig. 1 and as apparent from the above mathematical expressions. Particularly, when L1 = L2 and Lm1 = Lm2, the relationship VL1 = VLm1 = VL2 = VLm2 holds true, thereby equalizing voltage waveforms across all of the coils L1, L2, Lm1 and Lm2. This means that the ripple current or currents through the input coil L1 and/or the output coil L2 can be reduced by properly coupling these coils L1 ~ Lm2.

In the DC-DC converter 10 as shown in Fig. 1, illustrated are examples of ripple current waveforms for suppressing the ripple current through only the input coil L1 by coupling only the input coil L1 and the first intermediate coil Lm1, the ripple current through only the output coil L2 by coupling only the output coil L2 and the second intermediate coil Lm2 and ripple currents through both of the input coil L1 and the output coil L2 by coupling the input coil L1 and the first intermediate coil Lm1 as well as the output coil L2 and the second intermediate coil Lm2. It is to be noted herein that the coils to be coupled may be interchanged to have the similar result, i. e. , by coupling the input coil L1 and the second intermediate coil Lm2 and also the output coil L2 and the first intermediate coil Lm1.

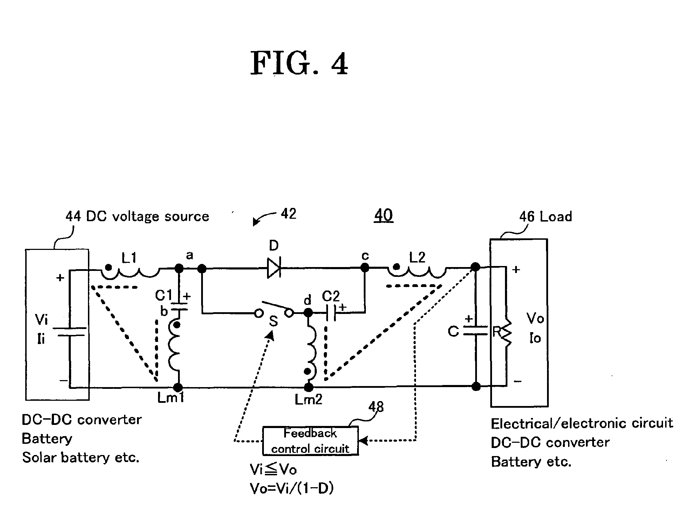

Now, applications or practical examples using the DC-DC converter according to the present invention will be described hereinafter. Fig. 4 shows a circuit schematic of a practical example of a DC-DC converter apparatus according to the present invention. The DC-DC converter apparatus 40 is designed to supply a stabilized step-up voltage to a load 46 such as an electrical/electronic circuit, another DC-DC converter, a battery or the like by the DC-DC converter 42 according to the present invention to which an unstable DC voltage from an input DC voltage source 44 is applied from a battery, a solar panel or the like. ON time of the switch S of the DC-DC converter 42 is controlled by a feedback control circuit 48 for providing a feedback so that a manner that the output voltage to the load 46 remains within a specified voltage range. In the DC-DC converter apparatus 40 as shown in Fig. 4, the input coil L1 and the first intermediate coil Lm1 as well as the output coil L2 and the second intermediate coil Lm2 are properly magnetically coupled for significantly reducing the ripple currents through the input coil L1 and the output coil L2 or making such ripple currents substantially zero.

In other words, the DC-DC converter apparatus 40 as shown in Fig. 4 comprises the DC-DC converter 42 including the input DC voltage source 42, the input coil L1, the output coil L2, intermediate coils Lm1, Lm2 and intermediate capacitors C1, C2, the load 46 including the load resistor R and the output (or smoothing) capacitor C and the feedback control circuit 48 for controlling the ON time of the switch by feeding back the output voltage across the load 46.

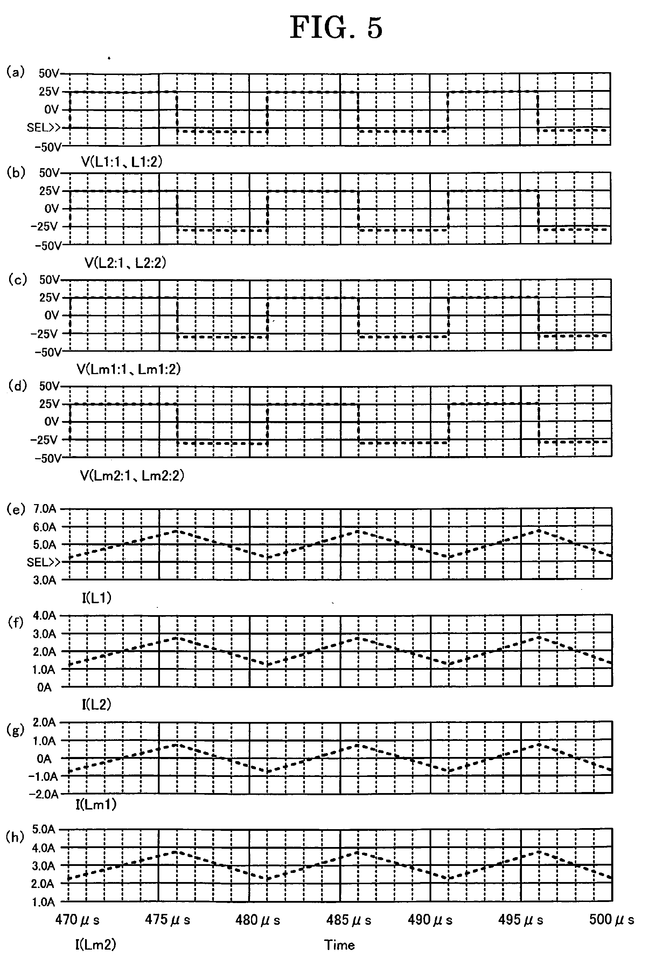

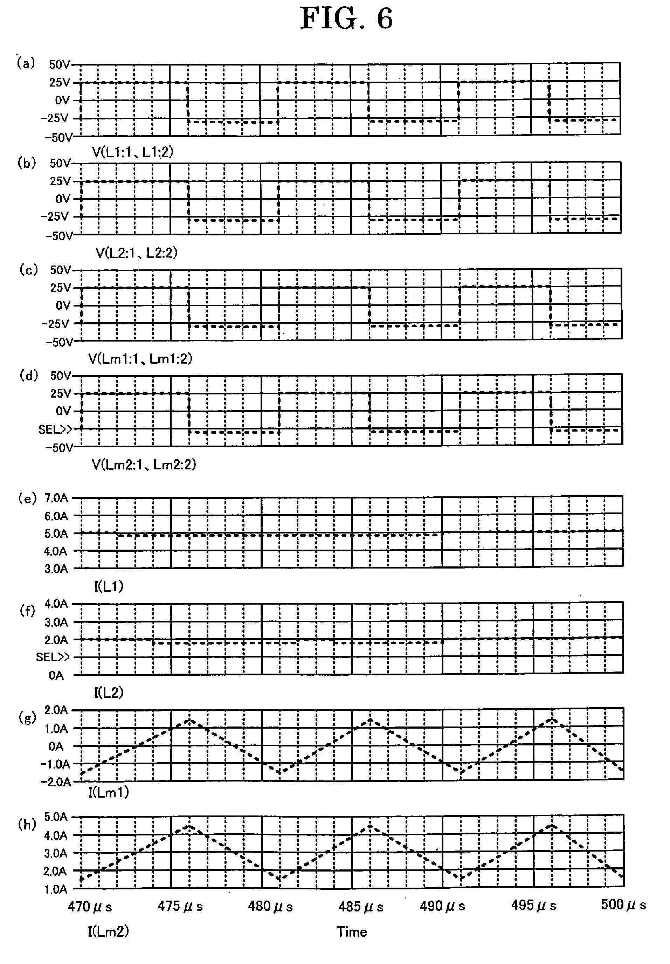

Now, a reference is made to operation waveforms in Fig. 5 and Fig. 6 for describing the operation of the DC-DC converter apparatus 40 as shown in Fig. 4. Fig. 5 and Fig. 6 show operation waveforms that are simulation results of the ripple currents through the input coil L1 and the output coil L2 of the DC-DC converter apparatus 40 under the following zero ripple current conditions:

Vi = 50V, Vo = 120V
L1 = L2 = 118$\mu$H, Lm1 = Lm2 = 50$\mu$H
C1 = C2 = 5$\mu$F, C = 100$\mu$F
S = ideal switch, D = ideal diode
Switching frequency = 100 kHz, ton = 4.17$\mu$S

Fig. 5 (a) - (h) illustrate operational waveforms in case of no coupling between the coils L1 ~ Lm2 of the DC-DC converter apparatus 40 as shown in Fig. 4. Fig. 5 (a) ~ (d) are voltage waveforms across the coils L1, L2, Lm1 and Lm2, while Fig. 5 (e) - (h) are current waveforms through these coils, respectively. It is understood that the voltages across all of these coils L1 ~ Lm2 are equal and are Vi/2 $\doteqdot$ 60V when the switch S is ON and - (Vo - Vi)/2 $\doteqdot$ - 35V when the switch S is OFF. The ripple currents through the respective coils L1 ~ Lm2 are $\Delta$IL1 = $\Delta$IL2 = Vi/2/L x ton $\doteqdot$ 1.2A and $\Delta$ILm1 = $\Delta$ILm2 = Vi/2/L x ton $\doteqdot$ 2.9A.

Now, Fig. 6 (a) - (h) illustrate operation waveforms in case of coupling between the input coil L1 and the first intermediate coil Lm1 as well as between the output coil L2 and the second intermediate coil Lm2 of the DC-DC converter apparatus 40 as shown in Fig. 4 with the following coupling conditions. Similarly to the case in Fig. 5, it is to be noted herein that Fig. 6 (a) - (h) are voltage and current waveforms across and through the coils L1, L2, Lm1 and Lm2, respectively. Winding ratio:

Between L1 and Lm1: n11 = √(Lm1/L1) = 0.65
Between L2 and Lm2: n22 = √(Lm2/L2) = 0.65
Coupling factor:
Between L1 and Lm1: k11 = n11 = 0.65
Between L2 and Lm2: k22 = n22 = 0.65

It is understood that the voltages across all of the coils L1 ~ Lm2 are equal and are Vi/2 ≒ 60V when the switch S is ON and - (Vo - Vi)/2 ≒ - 35V when the switch S is OFF. The ripple currents through the respective coils L1 -Lm2 are ΔIL1 = Δ IL2 ≒ 0A (zero ripple) and ΔILm1 = ΔILm2 = Vi/2/L x ton ≒ 2.9A. This means that the ripple currents through the input coil L1 and the output coil L2 are significantly reduced or substantially zero. In other words, the use of the DC-DC converter according to the present invention enables to reduce the ripple currents through the input coil L1 and the output coil L2 essentially zero, thereby significantly reducing noise as illustrated in Fig. 6 (e) and (f). Moreover, high electromagnetic adaptive performance helps to reduce the size of the filter to be added, thereby making the DC-DC converter compact. Additionally, since the voltages across the two or four coils are equal, it is possible to couple all of the coils in a single transformer, thereby enhancing compact and less expensive design of the DC-DC converter.

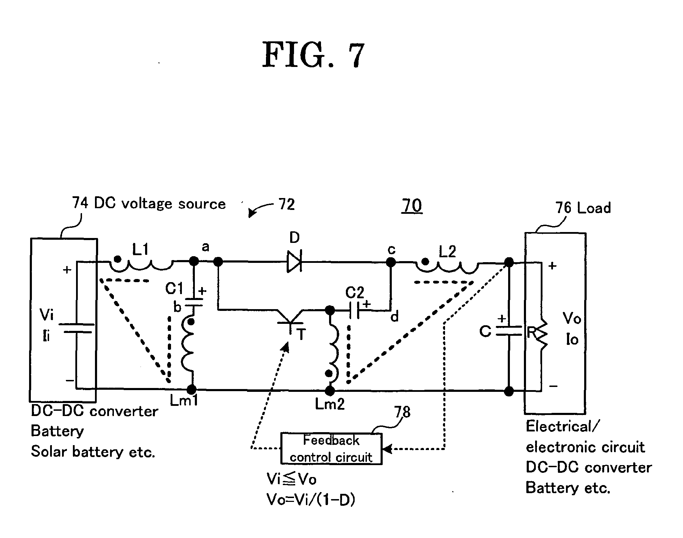

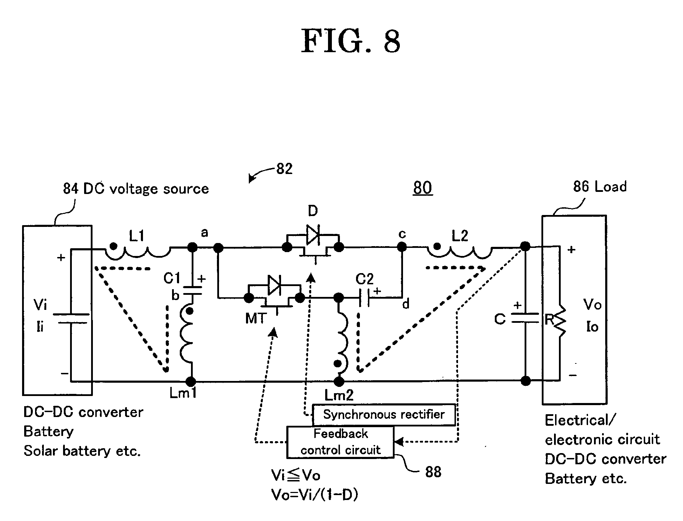

Now, other embodiments of the DC-Dc converter according to the present invention will be made with reference to Figs. 7 and 8. Fig. 7 shows a circuit schematic of another example of the DC-DC converter apparatus according to the present invention. The DC-Dc converter apparatus 70 comprises a DC-DC converter 72, a DC input voltage source 74, a load 76 and a feedback control circuit 78. The DC-DC converter apparatus 70 differs from the DC-DC converter apparatus 40 as shown in Fig. 4 in that the switch S of the DC-DC converter 72 comprises a bipolar transistor T and all other circuit configurations are essentially the same.

Fig. 8 shows a circuit schematic of still another example of the DC-DC converter apparatus according to the present invention. This DC-DC converter apparatus 80 comprises a DC-DC converter 82, a DC input voltage source 84, a load 86 and a feedback control circuit 88. Although the DC-DC converter apparatus 80 is similar to the DC-DC converter apparatus 40, 70 as shown respectively in Figs. 4 and 7, it differs in the use of power MOS FETs (abbreviated to MT) in place of the switch S and the diode D. A diode connected in parallel with each power MOSFET represents a parasitic diode. The output voltage is fed back by the feedback control circuit 88 by controlling ON time of the switch MT so that the output voltage is within a predetermined voltage range. Power loss of the power MOSFET can be reduced by turning ON the power MOSFET replacing the diode D in the OFF time of the switch MT (synchronous rectifying).

Now, the DC-DC converter and the DC-DC converter apparatus according to the present invention have been described hereinabove with reference to preferred embodiments and examples. However, it is to be understood that such embodiments and examples are simply for the purpose of describing the present invention rather than for restricting the present invention. A person having an ordinary skill in the art may be able to easily make various modifications and alternations without departing from the scope and spirit of the present invention.

The DC-DC converter according to the present invention having the particular construction and exhibiting unique advantages as described hereinabove finds wide applications. It can be applied to a power supply system and apparatus in which low noise is essential, such as a power supply system and apparatus that receives an input power from a solar panels, a power supply system and apparatus that receives an input power from a battery, a battery charging/ discharging system and apparatus, or the like.

**Claims**

1.   A DC-DC converter including an input inductor and a switching device connected in series between positive and negative terminals of an input voltage source, and a load connected to a node of the input inductor and the switching device through a rectifying device and an output inductor for converting the voltage of the input voltage source to a desired output voltage of the same polarity as the voltage of the input voltage source to be supplied to the load, further comprising:

   a first intermediate inductor connected between the output side of the input inductor and the negative terminal of the input voltage source; and
   a second intermediate inductor connected between the output side of the switching device and the negative terminal of the input voltage source;

   wherein the input inductor and the output inductor are magnetically coupled to the first intermediate inductor and the second intermediate inductor.

2.   A DC-DC converter of claim 1, further comprising a first intermediate capacitor connected between the input inductor and the first intermediate inductor; and a second intermediate capacitor connected between the switching device and the output side of the rectifying device.

**3.** A DC-DC converter of claim 1, wherein the input inductor and the first intermediate inductor (or the second intermediate inductor) have an equal inductance ratio as the output inductor and the second intermediate inductor (or the first intermediate inductor).

**4.** A DC-DC converter of claim 1, wherein the input inductor, the output inductor, the first intermediate inductor and the second intermediate inductor are made of a transformer having respective windings wound around a common core.

**5.** A DC-DC converter of claim 1, further comprising a feedback control circuit for controlling ON/OFF time of the switching device by detecting the output voltage of the load so that substantially constant output voltage is supplied to the load despite voltage fluctuation of the input voltage source.

**6.** A DC-DC converter of claim 1, wherein the input voltage source is a solar panels and the output voltage is supplied to various observation equipment installed in an artificial satellite including a planet exploration space craft.

**7.** A DC-DC converter comprising an input inductor and a switching device connected in series between positive and negative terminals of an input voltage source, and a load connected to a node of the input inductor and the switching device through a rectifying device for stepping up the voltage of the input voltage source to a desired voltage of the same polarity as the input voltage source before being outputted to the load, further comprising:

a first intermediate inductor and a first intermediate capacitor connected in series between the negative terminal of the input voltage source and a node of the input inductor and the rectifying device;
an output inductor connected between the rectifying device and the load;
a second intermediate inductor connected between the output end of the switching device and the negative terminal of the input voltage source; and
a second intermediate capacitor connected between a node of the second intermediate inductor and the switching device and a node of the rectifying device and the output inductor.

**8.** A DC-DC converter of claim 7, wherein the input and output inductors are magnetically coupled to the first and second intermediate inductors.

**9.** A DC-DC converter of claim 7, wherein the input inductor, the output inductor and the first and second intermediate inductors are made of a transformer including four windings wound around a common core.

**10.** A DC-DC converter of claim 7, further comprising a feedback control circuit for controlling ON/OFF time of the switching device by detecting the output voltage to be outputted to the load for maintaining the output voltage substantially constant despite voltage fluctuation of the input voltage source.

# FIG. 1

(a)

(b)  Transfer function

$$Vo=Vi/(1-D) \text{ (step-up, same polarity of input/output voltages)}$$
$$Vi=Vo*(1-D)$$
$$D=(Vo-Vi)/Vo$$

(c1)
Ripple currents under conditions below
L1=L2=L
Lm1=Lm2=Lm

L1 — Vi*Ton/L/2
Lm1 — Vi*Ton/Lm/2
L2 — Vi*Ton/L/2
Lm2 — Vi*Ton/Lm/2

No coupling between L1 and Lm1
No coupling between L2 and Lm2

(c2) or

≒0   ditto   Vi*Ton/L/2   ditto

Coupling between L1 and Lm1 k11=n11
n11=√(Lm1/L1)
$0 \leqq n11 \leqq 1$, $0 \leqq k11 \leqq 1$

(c3) or

Vi*Ton/L/2   ditto   ≒0   ditto

Coupling between L2 and Lm2 k22=n22
n22=√(Lm2/L2)
$0 \leqq n22 \leqq 1$, $0 \leqq k22 \leqq 1$

(c4) or

≒0   ditto   ≒0   ditto

Coupling between L1 and Lm1 k11=n11
Coupling between L2 and Lm2 k22=n22
n11=√(Lm1/L1)
$0 \leqq n11 \leqq 1$, $0 \leqq k11 \leqq 1$
n22=√(Lm2/L2)
$0 \leqq n22 \leqq 1$, $0 \leqq k22 \leqq 1$

(d)
Ripple potentials under conditions below
L1=L2=L
Lm1=Lm2=Lm

a   b   c   d

Vi+Vo/2
(Vi+Vo)/2
Vi/2
(Vo-Vi)/2
-(Vo-Vi)/2
-Vi/2

(e)
Voltages across coils under conditions below
L1=L2=L
Lm1=Lm2=Lm

L1   Lm1   L2   Lm2

Vi/2
0
-(Vo-Vi)/2

# FIG. 2

(a)

(b)

Node potentials and currents when switch S is ON

(c)

Node potentials and currents when switch S is OFF

# FIG. 3

(a) L1   L2   A pair of coils in circuit

Ripple currents

Voltages across coils

(b) Circuit having a pair of coupled coils

L1   L2

c Equivalent circuit of (b)

L1-M   L2-M

M

Winding ratio $n = \sqrt{(L1/L2)}$
Coupling coefficient k
Mutual inductance $M = k\sqrt{(L1 \times L2)}$

(d) L1-M=0   L2-M=0

M=L

In circuit (c)
(1) When k=n=1
    L1=L2=L
    M=L
    Ripple currents through L1, L2 are ½ of
    those before coupling
    (Because of equally splitting ripple currents
    when M=L=L1=L2)

(e) L1-M=0   L2-M

M=L1

(2) When $0 \leqq k=n \leqq 1$
    $M = \sqrt{(L1/L2)} \times \sqrt{(L1 \times L2)} = L1$
    Ripple current through L1 is the same as
    before coupling
    Ripple current through L2 is zero
    (Because L1 side impedance≪L2 side impedance
    or voltage across L2-M is always 0v)

(f) L1-M   L2-M=0

M=L2

(3) When $0 \leqq k=1/n \leqq 1$
    $M = \sqrt{(L2/L1)} \times \sqrt{(L1 \times L2)} = L2$
    Ripple current through L1 is zero
    Ripple current through L2 the same as
    before coupling
    (Because L1 side impedance≫L2 side impedance
    or voltage across L1-M is always 0v)

# FIG. 4

44 DC voltage source    42    40    46 Load

L1   a   D   c   L2

Vi
Ii

C1   b   S   d   C2

Lm1    Lm2

C   R   Vo   Io

DC-DC converter
Battery
Solar battery etc.

48
Feedback
control circuit

$Vi \leqq Vo$
$Vo = Vi/(1-D)$

Electrical/electronic circuit
DC-DC converter
Battery etc.

# FIG. 5

(a) V(L1:1、L1:2)

(b) V(L2:1、L2:2)

(c) V(Lm1:1、Lm1:2)

(d) V(Lm2:1、Lm2:2)

(e) I(L1)

(f) I(L2)

(g) I(Lm1)

(h) I(Lm2)

Time

# FIG. 6

(a) V(L1:1、L1:2)

(b) V(L2:1、L2:2)

(c) V(Lm1:1、Lm1:2)

(d) V(Lm2:1、Lm2:2)

(e) I(L1)

(f) I(L2)

(g) I(Lm1)

(h) I(Lm2)

Time

# FIG. 7

74 DC voltage source     72            70        76 Load

DC-DC converter
Battery
Solar battery etc.

Electrical/
electronic circuit
DC-DC converter
Battery etc.

Feedback
control circuit

$Vi \leqq Vo$
$Vo = Vi/(1-D)$

# FIG. 8

84 DC voltage source

~82

80

86 Load

Vi
Ii

DC-DC converter
Battery
Solar battery etc.

L1

a

C1

b

MT

Lm1

D

c

L2

C2

d

Lm2

Synchronous rectifier

Feedback
control circuit

88

Vi≦Vo
Vo=Vi/(1−D)

C

R

Vo
Io

Electrical/
electronic circuit
DC-DC converter
Battery etc.

# FIG. 9

**90**

(a)

(b) Transfer function

Vo=Vi/(1−D) (Step−up voltage)
Vi=Vo*(1−D)/D
D=(Vo−Vi)/Vo

(c) Ripple current

L
Vi*Ton/L

D
Ii+Vi*Ton/L/2

(d) Ripple potential

a

Vo
0

Vo

(e) Voltage across coil

L

Vi
0
−(Vo−Vi)

**EP 2 045 903 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007259402 A